# EUROPÄISCHE PATENTANMELDUNG

(11) **EP 1 246 460 A2**
(43) Veröffentlichungstag der Anmeldung: **02.10.2002**
(21) Anmeldenummer: 01128962.6
(22) Anmeldetag: 06.12.2001
(51) Int. Cl.: H04N 5/45

(54) **Fernsehempfangsgerät mit einer steuerbaren Schaltungsanordnung zur Wiedergabe einer Bild-im-Bild-Darstellung**

(30) Priorität: 29.03.2001 DE 10115709
(71) Anmelder: LOEWE OPTA GmbH, 96317 Kronach (DE)
(72) Erfinder: Müller, Heinrich, Ing.grad., 96352 Wilhelmsthal (DE); Ziska, Thomas, Dipl.-Ing., 96268 Mitwitz (DE)

(57) **Zusammenfassung**

Die Erfindung betrifft ein Fernsehempfangsgerät mit einer steuerbaren Schaltungsanordnung zur Wiedergabe einer Bild im Bild-Darstellung, bei der in einem oder neben einem Hauptbild auf dem Bildschirm durch Auslösen eines Steuerbefehls mittels eines Bedienelementes an der Ortsbedienung des Gerätes oder an einem Fernbedienungsgeber ein kleineres Nebenbild zusätzlich anzeigbar und durch nochmaliges Betätigen oder durch Betätigen eines weiteren Bedienelementes wieder ausblendbar ist, und die steuerbare Schaltungsanordnung bei Betätigung des Bedienelementes automatisch das von einer Signalquelle empfangene und dargestellte Hauptbild (H) in ein Format zur Darstellung als Nebenbild (N) umwandelt und darstellt und bei erneutem Betätigen des ersten Bedienelementes oder durch Betätigen eines anderen mit entsprechender Steuerfunktion belegten Bedienelementes zur Steuerung der gleichen Funktion wieder in ein Darstellungsformat des Hauptbildes (H) umwandelt und anzeigt.

## Beschreibung

Die Erfindung betrifft ein Fernsehempfangsgerät mit einer steuerbaren Schaltungsanordnung zur Wiedergabe einer Bild-im-Bild-Darstellung mit dem im Oberbegriff des Anspruchs 1 angegebenen Merkmal.

Ein gattungsgemäßes Fernsehempfangsgerät ist aus der DE 199 05 109 A1 bekannt. Dieses mit einer BIB-Schaltung versehene Gerät bietet eine Momentaufnahmefunktion zum Einfrieren der Hauptvideoanzeige im BIB-Anzeige-Nebenbild durch Betätigung einer Sondertaste auf einer Fernbedienungstastatur. Wenn der Fernsehempfänger normal arbeitet (BIB deaktiviert), wird durch eine Betätigung der Sondertaste das Hauptvideosignalbild auf den BIB-Eingang umgeschaltet und die BIB-Anzeige in ihrer größten Größe und in jener Position eingefroren, die sie inne hatte, als die BIB-Funktion das letzte Mal aktiviert worden war. Eine Videomeldung informiert den Betrachter darüber, dass eine Momentaufnahmefunktion aktiv ist. Eine nachfolgende Betätigung der Sondertaste schaltet das BIB-Signal zur BIB-Schaltung um und taut die Anzeige wie im normalen BIB-Betrieb auf. Eine weitere Betätigung der Sondertaste deaktiviert die BIB-Schaltung. Weiterhin ist aus der EP 229 027 A2 ein Fernsehgerät mit einer BIB-Funktion bekannt, bei dem in einem Hauptbild ein Nebenbild dargestellt ist. Dieses Nebenbild ist ein von dem Hauptbild oder einem Nebenbild abgeleitetes Nebenbild, das als Standbild wiedergegeben wird. Im Falle der Wegnahme des Nebenbildes erscheint ein neues Standbild.

Ferner ist aus der US 5 751 373 ein Fernsehempfangsgerät mit einer Onscreen-Anzeige eines Menüs bekannt, das in hierarchischer Struktur dargestellt ist. Die einzelnen Funktionen sind dabei in Blöcken auf dem Bildschirm dargestellt.

Aus der DE 692 23 031 T2 ist ferner ein Fernsehgerät bekannt, das Mittel zum Speichern eines Satzes von Signalen, die dem Satz von Signalen von unterschiedlichen Videoquellen entsprechen, ferner Videosignalverarbeitungsmittel zur Durchführung einer Wiedergabe mit mehreren Bildern unter Verwendung eines der Signale zur Auswahl eines der Videoquellen aus dem Satz von Videoquellen zur Erzeugung eines Hauptbildes der Wiedergabeeinheit und durch Verwendung aller der Signale, die dem Satz von Videoquellen entsprechen, zur Erzeugung zusätzlicher Bilder der Wiedergabeeinheit, die in den Abmessungen kleiner sind als das Hauptbild, aufweist. Darüber hinaus sind Steuermittel vorgesehen, die auf eine Aktivierung durch einen Zuschauer zur Wahl des Satzes von Videoquellen und zur Auswahl des Hauptbildes aus den zusätzlichen Bildern ansprechen. Die Wiedergabe mit mehreren Bildern weist dabei eine Anzeige auf dem Schirm auf, die anzeigt, welches der zusätzlichen Bilder dem Hauptbild entspricht. Ferner sind Steuermittel vorgesehen, die automatisch das Hauptbild aus den zusätzlichen Bildern entsprechend der neuen Positionierung der Anzeige auf dem Schirm auswählen. Bei Bedienen einer Taste des Fernbedienungsgebers für die Einblendung erscheinen auf dem Bildschirm zusätzliche Nebenbilder zu einem Hauptbild, die von anderen Signalquellen empfangen werden. Diese Signalquellen können andere Fernsehkanäle oder aber auch ein Videosignal einer Hauskamera oder ein solches von einem Bildplattenspieler oder VTR-Gerät (Video-Bandgerät) sein.

Bei dem vorbekannten Fernsehgerät, aber auch bei anderen Fernsehgeräten mit Bild-im-Bild-Funktion wird stets durch Betätigen eines ersten Bedienelementes, z.B. einer Funktionstaste, die steuerbare Schaltungsanordnung so aktiviert, dass auf dem Bildschirm bzw. dem Flachbildschirm eines Fernsehgerätes neben oder in dem Hauptbild ein Nebenbild erscheint, das ein Bild von einer anderen Signalquelle ist. Beispielsweise kann, wie aus der genannten Schrift ersichtlich, dies von einem anderen empfangenen Fernsehkanal wiedergegeben werden oder ein Videotextbild oder aber auch eine Onscreen-Darstellung der Funktion des Gerätes sein. Der Austausch der inhaltlichen Informationen erfolgt dann stets erst durch Bedienung weiterer Bedienelemente. So ist es auch möglich, über +/- Tasten zwischen empfangenen Kanälen zu zappen, wobei die Bilder der empfangenen Sendungen entweder als Nebenbilder oder als Hauptbild dargestellt werden können. Darüber hinaus ist es bekannt, durch Betätigen einer weiteren Funktionstaste auch einen Austausch der Bilddarstellungen eines Nebenbildes durch das Hauptbild und umgekehrt vorzunehmen. Dies erfolgt durch Ansprechen eines Nebenbildes und durch Betätigen einer entsprechend vorgesehenen Funktionstaste auf dem Fernbedienungsgeber oder auf der Ortsbedienung des Fernsehgerätes, so dass das Nebenbild als Hauptbild erscheint und das Hauptbild in den Hintergrund tritt. Für diese Funktion ist es erforderlich, dass das Gerät bereits hierfür aktiviert ist, d.h. sich im Bild-im-Bild-Darstellungsmodus befindet.

Ausgehend vom dargestellten Stand der Technik liegt der Erfindung die Aufgabe zugrunde, eine vereinfachte Bedienung zu ermöglichen, die insbesondere geeignet ist, bei Empfang von lästigen Werbeeinträgen in einfachster Weise auf einen anderen Empfangskanal oder eine andere Signalquelle umzuschalten und dennoch die Beobachtung des Werbebeitrages zu ermöglichen. Ebenso soll durch einfache Steuerung eine Überwachungsfunktion für ein weiteres Bild möglich sein.

Die Aufgabe löst die Erfindung durch Ausgestaltung des Fernsehempfangsgerätes mit den im Anspruch 1 angegebenen Merkmalen.

Nach der Erfindung wird beim Bedienen einer einzigen Funktionstaste bzw. eines Bedienelementes für die Funktion Bild-im-Bild-Darstellung automatisch das Hauptbild zum Nebenbild. Es erfolgt also keine vorgezogene Aktivierung, aus der heraus durch Betätigen einer weiteren Taste eine Umschaltung von Haupt- auf Nebenbild möglich ist, sondern eine Wandlung des Hauptbildes zum Nebenbild. Das dann verschwindende Hauptbild kann entweder automatisch durch ein anderes Bild eines anderen empfangenen Fernsehsignals ersetzt werden oder es kann auch beispielsweise das Videosignal von einer Kamera angeschaltet und im Hauptbild wiedergegeben werden. Diese Umschaltfunktionen sind nachfolgend möglich und entsprechen den bekannten Umschaltmöglichkeiten. Es ist auch möglich, mittels +/- Tasten die Hauptbilder durch solche anderer Kanäle wahlweise zu ersetzen. Das erste Nebenbild ist dann das Bild des bevorzugten Programms, das jederzeit durch nochmalige Betätigung der gleichen Funktionstaste oder einer anderen hierfür vorgesehenen Funktionstaste wieder zurückgeführt und zum Hauptbild wird. Es ist ersichtlich, dass darüber beispielsweise im Falle einer Werbeeinblendung ein außerordentlich schnelles Umschalten ermöglicht wird und dass der Werbebeitrag als verkleinertes Bild sichtbar bleibt bzw. im Hintergrund die Information als bevorzugtes Programm erhalten bleibt, so dass bei dem Betrachten des trachten des anderen Bildes, das nun an die Stelle des weggeblendeten Hauptbildes tritt, bei Beendigung des Werbeeintrages sofort wieder auf das Bild des ursprünglichen Kanals oder der Signalquelle umgeschaltet werden kann.

Dies stellt eine wesentliche Vereinfachung in der Handhabung eines solchen Fernsehgerätes mit Bild-im-Bild-Funktion dar, da nur wenige Tastendruckfolgen jedweden optimierten Bedienungskomfort ermöglichen.

Vorteilhafte Weiterbildungen der Erfindung sind in den Unteransprüchen im einzelnen selbsterklärend angegeben.

So sind mit der Erfindung nachfolgend genannte Anwenderszenarien auf einfache Weise realisierbar.

### Überbrücken von Werbeblöcken

Bei Betätigung der Funktionstaste bzw. des Bedienelementes Bild-im-Bild-Darstellung wird automatisch durch die Schaltungsanordnung das durch den Werbeblock unterbrochene aktuelle Programm in das Kleinbild, nämlich das Nebenbild, verschoben. Im Hauptbild erscheinen dann Bilder z.B. des vorher gewählten Programms. Darüber hinaus ist das Hauptbild über die Programmwahltasten in an sich bekannter Weise austauschbar, so dass jedes Programm wahlweise eingestellt werden kann. Gleichzeitig ist es aber auch möglich, das Ende des Werbeblockes durch Beobachten des Nebenbildes festzustellen. Zusätzlich kann auch die Programminformation aus dem Videotext oder dem EPG angezeigt werden. Wird nun das Ende des Werbeblockes visuell vom Benutzer festgestellt oder auch angezeigt, so wird durch nochmalige Betätigung der Funktionstaste "Bild-im-Bild" das unterbrochene Programm in das Hauptbild zurückgeholt und das Nebenbild erlischt oder aber die Bild-im-Bild-Funktion bleibt erhalten, so dass in dem Nebenbild andere Bilder von anderen Programmquellen angezeigt werden. Dies können beispielsweise Bilder von einer Kamera an einer Haustür sein, die zur Überwachung dann automatisch eingeschaltet wird. Bei erneutem Betätigen der Funktionstaste Bild-im-Bild-Darstellung wird dieses Bild wieder weggeschoben und automatisch das Hauptbild zum Nebenbild.

Im Falle, dass die Bild-im-Bild-Funktion beim Rückholen des Programms aus dem Nebenbild in das Hauptbild weiterhin erhalten bleibt, kann auch bei Auslegung der Funktionstaste als Mehrfunktionstaste durch einen weiteren Tastendruck die Abschaltung der Bild-im-Bild-Funktion erreicht werden. Dies ist aber auch durch Betätigen einer anderen entsprechend belegten Funktionstaste möglich.

Zum Überwachen einer Videoaufnahme kann das gleiche System aber auch herangezogen werden. Bei Betätigen der Funktionstaste Bild-im-Bild-Darstellung wird von der Schaltungsanordnung das dargestellte AV-Bild vom Bildaufnahmegerät in das Kleinbild, nämlich das Nebenbild, geschoben. Über die Programmwahltasten ist dann das Hauptbild bedienbar. Die Aufnahme des VTR-Gerätes ist also parallel visuell überwachbar. Wird festgestellt, dass beispielsweise ein Werbeeintrag gerade empfangen wird, der nicht mit aufgezeichnet werden soll, so ist eine unmittelbare Bedienung am Videogerät möglich oder aber auch bei ferngesteuerter Ausführung über das Fernsehempfangsgerät mittels Bussystem, um einen Stillstand des Aufzeichnungsgerätes zu bewirken. Erst wenn erkannt wird, dass das normale Programm fortgesetzt wird und der Werbeblock ausgelaufen ist, ist es sodann möglich, die Stopp-Funktion aufzuheben und die Aufnahme fortzusetzen. Eine vereinfachte Bedienung des VTR-Gerätes kann dabei auch durch eine zusätzliche Onscreen-Anzeige, beispielsweise im Nebenbild oder in einem zweiten Nebenbild, mit entsprechender Pausen-Funktionstastenanzeige realisiert werden.

Ein Fernsehgerät nach der Erfindung gestattet darüber hinaus eine Startüberwachung eines ausgewählten Programms. Zu diesem Zweck wird beispielsweise der Kanal angewählt, der im Hauptbild gezeigt werden soll. Wird der Programmbeitrag noch nicht gesendet und will der Benutzer will ein anderes Programm sehen, so betätigt er wiederum die Funktionstaste Bild-im-Bild-Darstellung, wodurch das augenblicklich gesehene Hauptbild in das Nebenbild geschoben wird und die Auswahl anderer Hauptbilder aus anderen Programmen möglich ist. Er überwacht visuell den Beginn des Programms und kann sodann wieder durch Betätigen der Funktionstaste oder einer anderen Funktionstaste das im Nebenbild erscheinende Wunschprogramm zum Hauptbild werden lassen.

Besitzt darüber hinaus das Fernsehgerät beispielsweise auch Telefonfunktion und kann aus einem Telefonregister heraus eine Anwahl erfolgen oder aber auch in Kombination mit dem Internet eine bestimmte Rechneradresse angewählt werden, so ist es auch möglich, im Hauptbild die Adressen bzw. die Telefonnummern und Namen des Telefonregisters zunächst darzustellen. Erfolgt nun eine Auswahl und soll später auch ein Telefongespräch geführt werden, so kann durch einfache Bedienung der Funktionstaste Bild-im-Bild-Darstellung das Hauptbild in das Nebenbild geschoben werden und so während des Telefonierens das Hauptbild betrachtet werden. Nach Beendigung des Telefonats ist sodann wieder eine Rückführung des Nebenbildes zum Hauptbild möglich, um einen anderen Gesprächspartner bzw. eine andere über das Telefonnetz erreichbare Signalquelle, z.B. eine Internetverbindung, aufrufen zu können.

Weiterhin ist unter Verwendung des gleichen Prinzips durch einfache Umschaltung auch eine Hausüberwachung, eine Baby-Überwachung möglich, wobei durch einfaches Bedienen mittels einer einzigen Funktionstaste für die Bild-im-Bild-Darstellung das gegenwärtige Hauptbild in das Nebenbild sofort übergeführt wird, beispielsweise eine Baby-Überwachung mittels Kamera in einem Nebenraum, und trotz des Sehens eines Fernsehbeitrages irgendeines Kanals im Hauptbild die Baby-Überwachung fortlaufend durchgeführt werden kann, bis die Funktion Bild-im-Bild-Darstellung ausgeschaltet wird.

Die Funktion ist aber auch verwendbar für den Fall, dass über das Fernsehgerät externe Geräte gesteuert werden sollen. Auch hier ist es beispielsweise möglich, die Benutzerführung bzw. die Onscreen-Darstellung des zu steuernden externen Gerätes abzufragen und als Signalquelle direkt für die Hauptbilddarstellung durchzuschalten. Erfolgt eine Steuerung, beispielsweise eines angeschlossenen Videorecorders oder eines angeschalteten Haushaltsgerätes, so kann durch Betätigen der Funktionstaste Bild-im-Bild-Darstellung das Hauptbild in das Nebenbild geschoben werden, um nachträgliche Steuerfunktionen durchzuführen oder Rückmeldungen aus der Steuerfunktion angezeigt zu erhalten bei gleichzeitigem Betrachten von Bildern anderer Signalquellen, die dann als Hauptbild dargestellt werden. Sobald eine Rückführung wieder in das Hauptbild erfolgt, ist eine weitere Steuerung möglich. Hier empfiehlt es sich, mit der Funktionsumschaltung zugleich auch eine Steuerfunktionsblockierung vorzusehen, so dass das angeschlossene externe Gerät nur dann über den Fernsehempfänger bedienbar ist, wenn das Nebenbild wieder zum Hauptbild geworden ist.

Die Erfindung wird nachfolgend anhand des in den Figuren dargestellten Ausführungsbeispiels ergänzend erläutert.

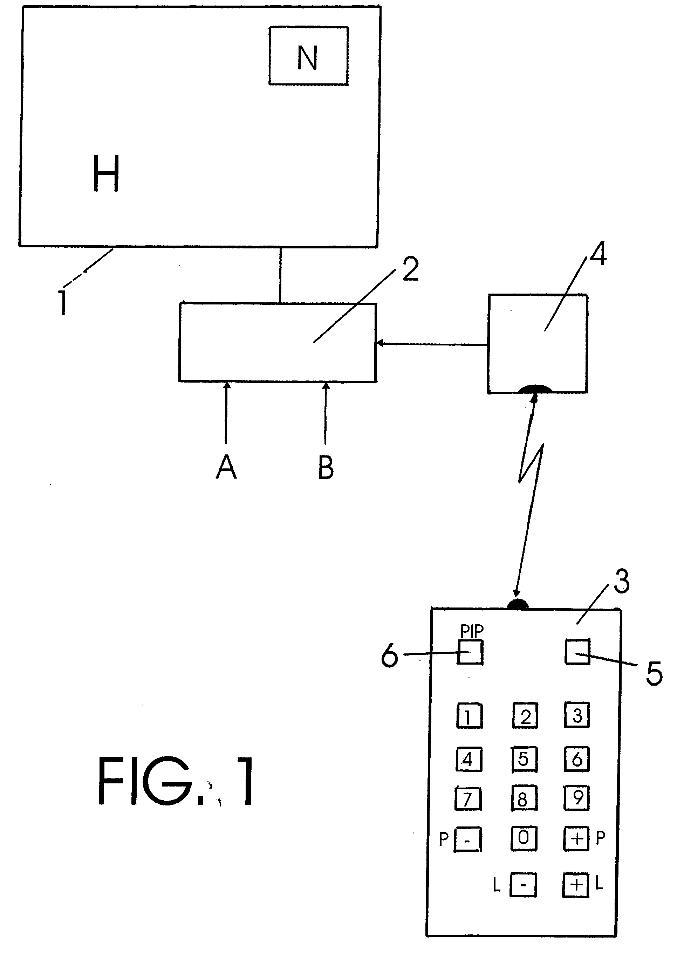

Das Ausführungsbeispiel in Fig. 1 zeigt einen Bildschirm 1, in welchem ein Hauptbild H und ein Nebenbild N anzeigbar sind. Die Bild-im-Bild-Darstellungsfunktion wird realisiert durch die steuerbare Schaltungsanordnung 2. Diese steuerbare Schaltungsanordnung weist beispielsweise einen Vollbildspeicher und einen Bild-im-Bild-Speicher auf sowie einen Prozessor, der die Bild-im-Bild-Überlagerung steuert, und eine Auswahlschaltung, um die Videosignalquellen wahlweise anzuschalten. Die Videosignalquellen liegen über die Eingänge A und B an der steuerbaren Schaltungsanordnung an. Der Betrachter sieht im Normalfall ein Hauptbild auf dem Fernsehbildschirm 1. Wird nun aber z.B. ein Werbeeintrag dargestellt und er will diesen nicht sehen, so kann er einen Programmwechsel vornehmen und bedient nach der Erfindung die auf dem Fernbedienungsgeber 3 vorgesehene PIP-Taste 4, die die Funktionstaste für die Bild-im-Bild-Darstellung ist. Mittels Infrarotlicht wird der entsprechende Steuerbefehl an einen Fernbedienungsempfänger 4 übertragen, der die Geräteschaltung, insbesondere die steuerbare Schaltungsanordnung 2, derart umschaltet, dass das Hauptbild, das als Vollbild erscheint, umgewandelt wird in ein Nebenbild N, das wesentlich verkleinert auf dem Bildschirm dargestellt wird, während das Hauptbild beispielsweise durch Bilder des vorher empfangenen Kanals ersetzt wird. Es ist aber auch möglich, mittels einer nicht darstellten Abstimmsteuerschaltung auf jeden beliebigen Empfangskanal oder andere Signalquellen das Hauptbild umzuschalten. Hierzu sind die Tasten 1, 2 bis 0 bzw. die Tasten P- und P+ auf dem Fernbedienungsgeber vorgesehen. Wird nun durch Beobachtung festgestellt, dass der Werbeblock beendet ist und will der Benutzer das ursprüngliche Programm weitersehen, so wird durch wiederholtes Betätigen der PIP-Taste 4 oder einer zusätzlichen entsprechend ausgelegten Funktionstaste 5 die Nebenbilddarstellung zur Hauptbilddarstellung zurückgeschaltet und entsprechend das Bild der empfangenen Signalquelle umgewandelt, um wieder als Hauptbild in Erscheinung zu treten und den gesamten Bildschirm auszufüllen.

Soll nun die Bild-im-Bild-Funktion gänzlich abgeschaltet werden, so kann dies automatisiert werden, indem mit dem Rückschalten automatisch das Nebenbild nicht mehr erscheint oder aber auch durch nochmaliges Betätigen der PIP-Taste 4 oder einer anderen Funktionstaste 5.

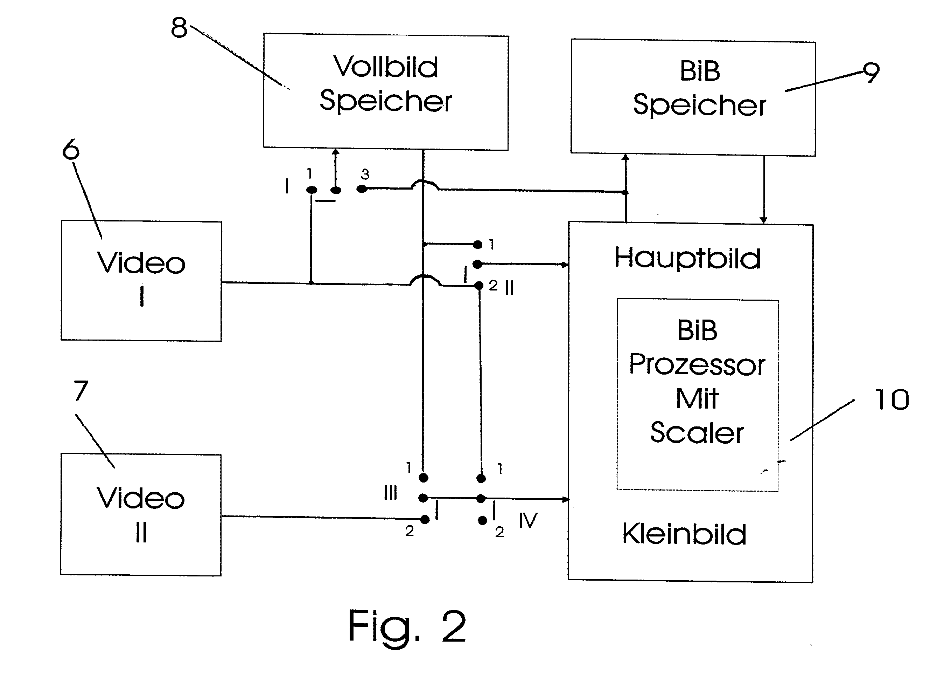

Ein Beispiel der Ausführung der steuerbaren Schaltungsanordnung 2 ist in Fig. 2 dargestellt in einem Blockschaltbild mit den wesentlichen elektronischen Baugruppen, die erforderlich sind, um die Umschaltfunktionen und Bild-im-Bild-Darstellungen zu ermöglichen. Die Blöcke 6 und 7 zeigen Videosignalquellen I und II, die beispielsweise mit abstimmbaren Tunern im Fernsehgerät verbunden sind, die wahlweise auf verschiedene Empfangskanäle abstimmbar sind. Die demodulierten Videosignale werden in einer Signalaufbereitungsschaltung aufbereitet. Die Signalausgänge sind mit Umschaltern I,II, III und IV verbunden, die selbstverständlich auch elektronisch realisiert sind, um wahlweise die Quellen an dem Vollbildspeicher 8 oder an dem Bild-im-Bild-Speicher 9 anzulegen oder aber auch an den Steuerprozessor 10 durchzuschalten, der mit der Steuerschaltung für das Anzeigedisplay verbunden ist, welches nicht dargestellt ist. Dieser Steuerprozessor 10 beinhaltet auch die Bild-im-Bild-Steuerung, um im oder neben dem Hauptbild das Nebenbild darstellen zu können, z.B. ein verkleinertes 4:3 Nebenbild auf einem 16:9formatigen Bildschirm neben einem 4:3 Hauptbild.

Durch Verbringen der Schalter in entsprechende Schalterstellungen, nämlich des Schalters I in die Stellung 1, wird das Bild der Videosignalquelle I im Vollbildspeicher gespeichert und je nach Beschaltung der Schalter II und IV an den Hauptbild- oder Kleinbild-Eingang des Prozessors 10 gelegt. Wird der Schalter III auf die Position 1 und dabei mit dem mittleren Eingang verbunden, wird das Bild im Bildspeicher 9 gespeichert und kann aus diesem wieder herausgelesen werden. Im Falle, dass der Schalter II in die Position 1 gerückt wird, erfolgt das Auslesen des Bildspeichers im Großbildformat. Wird der Schalter IV in die Stellung 1 verbracht, so wird das Videosignal der Quelle 6 zum Kleinbild. Die logische Verknüpfung wird durch den Prozessor bzw. ein Softwareprogramm in einem anderen Chassisprozessor gesteuert. Es ist ersichtlich, dass hierüber durch einfache Betätigung mittels einer einzigen Taste jede gewünschte Kombination möglich ist. Wird beispielsweise eine Türkamera über die Video-Eingangsquelle 7 eingespeist, so kann beim Schalten des Schalters III in die Position 2 das Videobild 2 im Kleinbildformat dargestellt werden. Wird der Schalter I in die Position 3 verbracht, so können im Vollbildspeicher Kleinbilder abgelegt werden. Wird der Schalter II in die Position 1 verbracht, so können N Kleinbilder dargestellt werden.

## Patentansprüche

1. Fernsehempfangsgerät mit einer steuerbaren Schaltungsanordnung zur Wiedergabe einer Bild im Bild-Darstellung, bei der in einem oder neben einem Hauptbild auf dem Bildschirm durch Auslösen eines Steuerbefehls mittels eines Bedienelementes an der Ortsbedienung des Gerätes oder an einem Fernbedienungsgeber ein kleineres Nebenbild zusätzlich anzeigbar und durch nochmaliges Betätigen oder durch Betätigen eines weiteren Bedienelementes wieder ausblendbar ist, und die steuerbare Schaltungsanordnung bei Betätigung des Bedienelementes automatisch das von einer Signalquelle empfangene und dargestellte Hauptbild (H) in ein Format zur Darstellung als Nebenbild (N) umwandelt und darstellt und bei erneutem Betätigen des ersten Bedienelementes oder durch Betätigen eines anderen mit entsprechender Steuerfunktion belegten Bedienelementes zur Steuerung der gleichen Funktion wieder in ein Darstellungsformat des Hauptbildes (H) umwandelt und anzeigt, **dadurch gekennzeichnet,**
**dass** als Reaktion auf eine einzige Betätigung des Bedienelementes (4) ein Nebenbild (N) erscheint, welches das Fernsehsignal der zuvor im Hauptbild (H) wiedergegebenen Signalquelle darstellt, während im Hauptbild (H) das Fernsehsignal einer anderen Signalquelle dargestellt wird,
**dass** der Benutzer nun die Möglichkeit hat, die im Hauptbild (H) wiedergegebene Signalquelle beliebig zu wechseln,
und **dass** als Reaktion auf eine nochmalige Betätigung des Bedienelementes (4) das Hauptbild (H) wieder zur Darstellung der ursprünglich im Hauptbild (H) wiedergegebenen Signalquelle zurückkehrt.

2. Fernsehempfangsgerät nach Anspruch 1, **dadurch gekennzeichnet, dass** die Bedienelemente (4) an sich bekannte Tastenelemente sind.

3. Fernsehempfangsgerät nach Anspruch 1 oder 2, **dadurch gekennzeichnet, dass** nach der Betätigung des ersten Bedienelementes oder des Tastenelementes das Hauptbild durch Bilder von empfangbaren Signalquellen durch beliebige Kanalwahl mittels Kanalwahltasten oder Programmwahltasten austauschbar ist, während das Nebenbild das umgewandelte erste Hauptbild darstellt.

4. Fernsehempfangsgerät nach Anspruch 1 oder 2, **dadurch gekennzeichnet, dass** eine weitere Funktionstaste an der Ortsbedienung oder der Fernbedienung zur Aktivierung einer wahlfreien Darstellung von Bildern von empfangbaren Signalquellen durch beliebige Kanalwahl mittels Kanalwahltasten oder Programmwahltasten vorgesehen ist.

5. Fernsehempfangsgerät nach einem der Ansprüche 1 bis 3, **dadurch gekennzeichnet, dass** das erste Bedienelement (4) oder das erste Tastenelement an der Ortsbedienung oder der Fernbedienung ein Mehrfunktionseinstellelement ist, bei dessen zweiter Betätigung die steuerbare Schaltungsanordnung das Nebenbild für die Darstellung von Bildern von einer anderen Signalquelle und die Tunersteuerschaltung aktiviert, um durch Kanalfortschaltung oder Direktkanalwahl mittels Kanalwahltasten oder Programmwahltasten das Nebenbild durch diese Bilder zu ersetzen, und bei der dritten Betätigung automatisch das erste Nebenbild wieder zum Hauptbild umwandelt.

6. Fernsehempfangsgerät nach einem der vorhergehenden Ansprüche, **dadurch gekennzeichnet, dass** die Bilder bewegte Bilder von laufenden empfangenen Sendern sind, die die Signalquellen sind.

7. Fernsehempfangsgerät nach einem der vorhergehenden Ansprüche, **dadurch gekennzeichnet, dass** die steuerbare Schaltungsanordnung mindestens einen Bildspeicher für Nebenbilder und eine logische Schaltungsanordnung zum verknüpften Auslesen der Speicherinhalte und zum Kombinieren der Signale von den Videosignalquellen nach deren Aufbereitung aufweist.

8. Fernsehempfangsgerät nach einem der vorhergehenden Ansprüche, **dadurch gekennzeichnet, dass** im Hauptbild Steuerfunktionen dargestellt sind, die nach Cursorauswahl durch eine Auslösefunktionstaste auslösbar sind, und dass beim Umschalten des Hauptbildes zum Nebenbild eine Blockierschaltung aktiviert wird, die die Steuerung aus dem Nebenbild blockiert.
